# EUROPÄISCHE PATENTANMELDUNG

(11) **EP 3 791 982 A1**
(43) Veröffentlichungstag der Anmeldung: **17.03.2021**
(21) Anmeldenummer: 20195127.4
(22) Anmeldetag: 08.09.2020
(51) Int. Cl.: B23C 5/10, B23C 5/28, B23P 15/34

(54) **FRÄSWERKZEUG MIT KÜHLKANÄLEN**

(30) Priorität: 10.09.2019 DE 102019124223
(71) Anmelder: FRANKEN GmbH & Co. KG Fabrik für Präzisionswerkzeuge, 90607 Rückersdorf (DE)
(72) Erfinder: Glimpel, Helmut, 91207 Lauf (DE); Mößel, Tobias, 91207 Lauf (DE); Lauffer, Hans-Jürgen, 91207 Lauf (DE)
(74) Vertreter: Schröer, Gernot H.

(57) **Zusammenfassung**

Die Erfindung betrifft ein Fräswerkzeug (2) umfassend einen Schaft (4) mit einer Drehachse (T) und einen Profilkörper (6), wobei der Profilkörper (6) zumindest eine Schneidkante (8, 9), einen ersten Kühlkanal (10) und einen zweiten Kühlkanal (12) aufweist, wobei der erste Kühlkanal (10) im Schaft (4) zumindest abschnittsweise entlang der Drehachse (T) verläuft, wobei der erste Kühlkanal (10) und der zweite Kühlkanal (12) fluidverbunden sind und wobei der zweite Kühlkanal (12) zumindest einen ersten Austrittsöffnung (20) aufweist, wobei die Austrittsöffnungsfläche der ersten Austrittsöffnung (20) der Schneidkante (8, 9) gegenüberliegt.

Weiterhin betrifft die Erfindung ein Verfahren zum Herstellen eines solchen Fräswerkzeugs.

## Beschreibung

Die Erfindung betrifft ein Verfahren zur Herstellung eines Fräsers und einen Fräser, insbesondere einen Schaftfräser oder Einschraubfräser.

Ein Schaftfräser ist zum flächigen Abtragen von Material an einer Werkstückoberfläche vorgesehen und wird dazu in einer Fräsbewegung durch Drehung des Schaftfräsers um eine Werkzeugachse in einer vorgegebenen Drehrichtung bei gleichzeitigem Vorschub relativ zur Werkstückoberfläche an dieser entlang, meist parallel zur Werkstückoberfläche, bewegt. In der Regel weist ein Schaftfräser einen entlang der Werkzeugachse langgestreckten, im Wesentlichen zylindrischen Schaft und ein sich anschließendes Kopfteil mit einem Umfangsbereich mit Umfangsfrässchneiden und einer Stirnseite mit oder ohne Stirnfrässchneiden auf. Der Schaftfräser weist am vom Kopfteil abgewandten Ende einen Einspannbereich zum Einspannen in eine Werkzeugaufnahme auf, die mit einer Werkzeugmaschine gekoppelt ist.

Um den flächigen spanenden Materialabtrag zu ermöglichen, erstrecken sich die Umfangsfrässchneiden durchgehend und ohne Unterbrechungen auf einer um die Werkzeugachse rotationssymmetrischen, in der Regel zylindrischen, Umfangsfläche über eine axiale Länge axial zur Werkzeugachse (oder: in Projektion auf die Werkzeugachse) und greifen im Wesentlichen über ihre gesamte axiale Länge mit einer zur Werkzeugachse radialen Eingriffstiefe in die Werkstückoberfläche ein. Die axiale Länge der Frässchneiden ist dabei deutlich größer, in der Regel um mindestens den Faktor 5 bis 10 größer, als die radiale Eingriffstiefe. Die Umfangsfrässchneiden können zwar auch parallel zur Werkzeugachse geradlinig verlaufen, sind jedoch in der Regel um die Werkzeugachse unter einem Drallwinkel gedrallt verlaufend oder helikal ausgebildet. Durch die Fräsbewegung erfolgt der für das Fräsen kennzeichnende diskontinuierliche Schnitt der Frässchneiden, der das Abheben von Spänen des Werkstücks über die Oberfläche bewirkt.

Bei bekannten Fräsertypen Schlichtfräsern, Schruppfräsern und Schruppschlichtfräsern schneidet jede Frässchneide über ihre gesamte Länge. Schlichtfrässchneiden sind also glatt und ohne Spanteiler ausgebildet. Die bei Schruppfräsern vorgesehenen Erhebungen bei welligen Schneiden bilden dann runde Spanteiler, aufgrund derer die Späne zerteilt werden, wodurch ein größeres Spanvolumen oder ein tieferer Eingriff mit größeren Spänen in das Werkstück möglich ist. Die radiale Eingriffstiefe ist also tiefer als die Vertiefungen in den Frässchneiden der Schruppfräser und der Schruppschlichtfräser oder mit anderen Worten größer als die Höhe der Erhebungen, so dass flächig über den gesamten Bereich der Werkstückoberfläche das Material abgetragen wird, an dem sich die Frässchneiden entlang bewegen, wobei die Erhebungen lediglich als Spanteiler für die abgehobenen Späne wirken. Ein Schaftfräser ist beispielsweise aus der DE 10 2015 116 443 A1 bekannt.

Bekannte Fräswerkzeuge umfassen insbesondere einen oder mehrere Kühlmittelkanäle. Solche Kühlmittelkanäle können sich radial nach außen erstreckende Abschnitte aufweisen, welche im Bereich der Umfangsschneiden Austrittsöffnungen aufweisen. Die Austrittsöffnungen und Kühlmittelkanäle sind üblicherweise gebohrt, so dass ein austretender Kühlmittelstrahl sich radial und/oder axial nach außen erstreckt. Solche Fräswerkzeuge sind z.B. im Emuge-Franken Katalog 250 auf Seite 64 abgebildet. Die Fräswerkzeuge können für Luft, Wasser, Minimalmengenschmierung (MMS) und/oder auch für kryogene Kühlmittel vorgesehen sein.

Unzureichende Kühlung ist häufig ein Grund für eine vorzeitige Werkzeugermüdung. Wenn eine Kühlung nur erfolgt, wenn das Werkzeug nicht mit dem zu bearbeitenden Material in Eingriff ist, kann es zu Temperaturschocks kommen, bei denen es insbesondere zu Rissbildung kommt.

DE 10 2013 104 222 A1 offenbart ein Schneidwerkzeug, insbesondere einen Bohrer, einen Fräser, ein Drehwerkzeug, ein Einstechwerkzeug oder ein Reibwerkzeug, welches ein hybrider Verbundkörper ist. Der hybride Verbundkörper besteht aus zwei unterschiedlich hergestellten Teilbereichen, darunter einen Teil aus einem additiven Herstellungsverfahren. Der Arbeitsabschnitt des Werkzeugs kann direkt auf den Schaft aufgewachsen sein und einen internen Kühlmittelkanal aufweisen, dessen Querschnitt sich ändern kann. Der Kühlmittelkanal kann helixförmig sein.

DE 10 2014 207 507 A1 offenbart ein Zerspanungswerkzeug, insbesondere ein Rotationswerkzeug wie einen Bohrer oder Fräser, mit einem sich in einer Axialrichtung erstreckenden monolithischen Grundkörper, der zumindest in einem Teilbereich eine nichtmassive Kernstruktur aufweist, die von einem massiven Außenmantel umgeben ist. Die Kernstruktur kann zur Leitung von Kühlmittel ausgebildet sein und der Grundkörper kann durch 3D-Druck hergestellt werden. Die Austrittsstelle für Kühl- oder Schmiermittel ist hier bevorzugt im 3D-Druckverfahren hergestellt und weist eine komplexe Geometrie auf.

DE 10 2014 207 510 A1 ergänzt die DE 10 2014 207 507 A1 dahingehend, dass sie im Bereich einer Werkzeugspitze eine integrierte Kühlstruktur für die Führung eines Kühl- oder Schmiermittels offenbart, die zumindest in Teilbereichen als eine poröse Struktur ausgebildet ist oder wonach zumindest ein Kühlkanal einen Umkehrabschnitt aufweist, so dass zwei gegenläufig orientierte Kanalabschnitte ausgebildet sind. Bei dem Schneidelement kann es sich um eine austauschbare Schneidplatte handeln. Eine Kühlstruktur im Zerspanungswerkzeug kann zumindest teilweise mit 3D-Druck hergestellt sein.

EP 1 864 748 B1 beschreibt ein Verfahren zur Herstellung eines Zerspanungswerkzeugs mit einem an einem Werkzeuggrundkörper vorgesehenen Werkzeughalter für ein lösbar anbringbares Schneidwerkzeug und mit Kanälen zur Kühlmittelzufuhr, wobei der Werkzeuggrundkörper und/oder der Werkzeughalter mittels eines generativen Fertigungsverfahrens hergestellt werden. Hierbei können nahezu beliebige innere Strukturen wie z.B. strömungsgünstig geformte innere Kühlmittelkanäle hergestellt werden, wobei ein strömungsgünstiger Einlauf sowie ein oder mehrere Kühlmittelauslässe in unmittelbarer Nähe der Werkzeugschneide angeordnet werden können.

Aufgabe der Erfindung ist es, ein Fräswerkzeug und ein Verfahren zum Herstellen eines Fräswerkzeugs anzugeben, welches eine besonders effiziente Kühlung der Schneiden aufweist und eine erhöhte Werkzeugstandzeit erlaubt.

Ein erfindungsgemäßes Fräswerkzeug umfasst einen Schaft mit einer Drehachse und einen Profilkörper, wobei der Profilkörper zumindest eine erste Schneidkante, einen ersten Kühlkanal und einen zweiten Kühlkanal aufweist, wobei der erste Kühlkanal im Schaft zumindest abschnittsweise entlang der Drehachse verläuft, wobei der erste Kühlkanal und der zweite Kühlkanal fluidverbunden sind und wobei der zweite Kühlkanal zumindest eine erste Austrittsöffnung aufweist, wobei die Austrittsöffnungsfläche der ersten Austrittsöffnung der ersten Schneidkante gegenüberliegt. Durch die Anordnung der Austrittsöffnungsfläche gegenüberliegend der ersten Schneidkante, kann eine Kühlflüssigkeit direkt auf die erste Schneidkante gespritzt werden, so dass die Kühlung besonders zielgerichtet erfolgt. Als Kühlflüssigkeit kommen z.B. Wasser, Luft oder MMS aber auch flüssiger Stickstoff in Betracht. Die Austrittsöffnungsfläche ist insbesondere in Drehrichtung des Fräswerkzeugs vorrauseilend der ersten Schneidkante angeordnet. Der zweite Kühlkanal kann insbesondere ein Kühlkanal für eine Stirnschneidkante sein, wenn die erste Schneidkante eine Stirnschneidkante ist. Weiterhin kann der zweite Kühlkanal ein Kühlkanal für eine Umfangsschneidkante sein, wenn die erste Schneidkante eine Umfangsschneidkante ist. Das Fräswerkzeug ist so ausgelegt, dass Kühlflüssigkeit schaftseitig in den ersten Kühlkanal eintritt und durch den ersten Kühlkanal in den zweiten Kühlkanal und optional einen dritten Kühlkanal geleitet wird. Dabei mündet der erste Kühlkanal insbesondere in einem stirnseitigen Bereich des Fräswerkzeugs in den zweiten oder dritten Kühlkanal. Dabei sind der erste Kühlkanal und der zweite oder dritte Kühlkanal zweckmäßigerweise so ausgerichtet, dass sich eine Fließrichtung des Kühlmittels um 90° bis 180° gegenüber der Fließrichtung im ersten Kühlkanal dreht. Im zweiten oder dritten Kühlkanal fließt das Kühlmittel axial nach außen und/oder in Richtung des Schafts zurück.

In Ausgestaltung weist das Fräswerkzeug zumindest zwei erste Schneidkanten auf, weiterhin umfasst das Fräswerkzeug zumindest einen dritten Kühlkanal, welcher zumindest eine zweite Austrittsöffnung aufweist, wobei die Austrittsöffnungsfläche der ersten Austrittsöffnung einer der ersten Schneidkanten und die zweite Austrittsöffnung der anderen der ersten Schneidkanten gegenüberliegt. Der dritte Kühlkanal ist zweckmäßigerweise ein Kühlkanal für eine Stirnschneidkante, wenn der zweite Kühlkanal ein Kühlkanal für eine Umfangsschneidkante ist. Wenn der zweite Kühlkanal ein Kühlkanal für eine Stirnschneidkante ist, ist der dritte Kühlkanal zweckmäßigerweise ein Kühlkanal für eine Umfangsschneidkante.

Zweckmäßigerweise weist das Fräswerkzeug mehrere zweite Kühlkanäle und/oder mehrere dritte Kühlkanäle auf, welche mit dem ersten Kühlkanal fluidverbunden sind.

Insbesondere ist an einem Ende des ersten Kühlkanals eine Verteilerkammer angeordnet, wobei sich die zweiten Kühlkanäle und/oder die dritten Kühlkanäle von der Verteilerkammer erstrecken. Eine solche Verteilerkammer ist insbesondere im stirnseitigen Bereich des Fräswerkzeugs angeordnet. Vorteilhafterweise ist die Verteilerkammer bezüglich der Drehachse rotationssymmetrisch. Die Verteilerkammer ist zweckmäßigerweise ein Ellipsoid oder kugelförmig ausgestaltet. Eine Verteilung des Kühlmittels von einer stirnseitigen Verteilerkammer hat den Vorteil, dass die Kühlwirkung insbesondere in den Bereichen erfolgt, wo sich das Fräswerkzeug in Benutzung am stärksten erwärmt. Insbesondere wird Wärme an den ersten Schneidkanten entzogen.

In Ausgestaltung stimmt die Anzahl der zweiten Kühlkanäle und/oder die Anzahl der dritten Kühlkanäle mit der Anzahl der ersten Schneidkanten überein.

Zweckmäßigerweise ist die erste Schneidkante eine Umfangsschneidkante oder eine stirnseitige Schneidkante. Somit kann das Fräswerkzeug die gleiche Anzahl Umfangsschneidkanten und stirnseitigen Schneidkanten aufweisen. Insbesondere weist das Fräswerkzeug je zwei, je drei, je vier, je fünf oder je sechs oder mehr stirnseitige Schneidkanten und/oder Umfangsschneidkanten auf. Eine höhere Anzahl von ersten Schneidkanten ist möglich. Die Umfangsschneidkanten können insbesondere wendelförmig bzw. helixförmig um die Drehachse verlaufen.

In einer Ausgestaltung umfasst der Schaft eine Vorrichtung zur lösbaren kraftschlüssigen und/oder formschlüssigen Verbindung, insbesondere ein Gewinde, Bajonettverschluss etc.. Im Falle eines Gewindes ist das Fräswerkzeug als Einschraubfräser ausgebildet.

In einer weiteren Ausgestaltung weist der Schaft und/oder Profilkörper innenliegende Hohlräume auf, so dass der Materialverbrauch reduziert wird bzw. das Gewicht des Fräswerkzeuges reduziert wird. Bei dieser Ausgestaltung weist der Schaft und/oder Profilkörper um die Hohlräume eine Struktur, insbesondere ein Gitter auf, welches die Kräfte während des Werkzeugeinsatzes aufnimmt, so dass es durch die Hohlräume zu keinen Stabilitätseinbußen kommt.

Das Fräswerkzeug ist bevorzugt zumindest teilweise, insbesondere vollständig aus HSS oder Hartmetall hergestellt. Das Fräswerkzeug kann auch in einem Abschnitt aus HSS, z.B. den Schaft oder inneren Bereich, und einem weiteren aus Hartmetall, z.B. die Schneiden oder äußeren Bereich, hergestellt sein. In weiterer Ausführungsform kann das Fräswerkzeug zumindest teilweise, insbesondere im Bereich der Kühlkanäle aus Kupfer hergestellt sein. Das Fräswerkzeug kann zusätzlich mit einer Hartschicht z.B. aus CrN beschichtet sein. Das erfindungsgemäße Fräswerkzeug ist insbesondere zumindest teilweise mittels eines additiven Verfahrens hergestellt. Das Fräswerkzeug ist vorzugsweise für die Verwendung von Wasser, Luft, MMS oder flüssigem Stickstoff als Kühlmittel ausgelegt.

Eine mit den vorgenannten Merkmalen oder alternativ auch unabhängig von den vorhergehenden Ausführungsformen beanspruchbare erfindungsgemäße Ausführungsform eines Fräswerkzeug umfasst einen Schaft mit einer Drehachse und einen Profilkörper, wobei der Profilkörper zumindest eine zweite Schneidkante, einen ersten Kühlkanal und einen zweiten Kühlkanal aufweist, wobei der erste Kühlkanal im Schaft zumindest abschnittsweise entlang der Drehachse verläuft, wobei der erste Kühlkanal und der zweite Kühlkanal fluidverbunden sind und wobei der zweite Kühlkanal zumindest abschnittsweise parallel zu der zweiten Schneidkante verläuft. Das Fräswerkzeug ist so ausgelegt, dass Kühlflüssigkeit schaftseitig in den ersten Kühlkanal eintritt und durch den ersten Kühlkanal in den zweiten Kühlkanal und optional einen dritten Kühlkanal geleitet wird. Zweiter und dritter Kühlkanal weisen insbesondere im Bereich des Profilkörpers Austrittsöffnungen auf. Dabei mündet der erste Kühlkanal insbesondere in einem stirnseitigen Bereich des Fräswerkzeugs in den zweiten oder dritten Kühlkanal. Dabei sind der erste Kühlkanal und der zweite oder dritte Kühlkanal zweckmäßigerweise so ausgerichtet, dass sich eine Fließrichtung des Kühlmittels um 90° bis 180° gegenüber der Fließrichtung im ersten Kühlkanal dreht. Im zweiten oder dritten Kühlkanal fließt das Kühlmittel axial nach außen und/oder in Richtung des Schafts zurück.

Wenn das Fräswerkzeug eine erste und eine zweite Schneidkante aufweist, ist die erste Schneidkante benachbart zur zweiten Schneidkante. Insbesondere ist die erste Schneidkante die der zweiten Schneidkante nachfolgende Schneidkante. Somit kann eine Schneidkante bezüglich eines Kühlkanals erste Schneidkante und bezüglich des benachbart angeordneten Kühlkanals zweite Schneidkante sein. Eine Schneidkante ist zweite Schneidkante, wenn sie durch einen darunterliegenden Kühlkanal gekühlt werden kann und/oder erste Schneidkante, wenn sie durch einen austretenden Kühlmittelstrahl gekühlt wird. Optional umfasst das Fräswerkzeug eine weitere zweite Schneidkante und einen dritten Kühlkanal, wobei der dritte Kühlkanal zumindest abschnittsweise parallel zur weiteren zweiten Schneidkante verläuft. In Ausgestaltung verläuft der zweite Kühlkanal und/oder dritte Kühlkanal konturnah zur jeweiligen Stirnschneidkante oder Umfangsschneidkante.

Der zweite Kühlkanal und/oder dritte Kühlkanal weist insbesondere einen Querschnitt über die gesamte Länge oder abschnittsweise auf, welcher ausgewählt ist aus: Rund, Dreieckig, Oval, Tropfenförmig, Viereckig, Rechteckig, Quadratisch, Trapezförmig, Fünfeckig. Der jeweilige Kühlkanal kann in unterschiedlichen Abschnitten unterschiedliche Querschnittsflächen aufweisen. So kann z.B. ein zweiter Kühlkanal der sich zunächst radial und im weiteren Verlauf spiralförmig um die Drehachse erstreckt, zunächst einen runden und im Spiralabschnitt tropfenförmigen Querschnitt aufweisen. Der zweite oder dritte Kühlkanal ist insbesondere dazu ausgelegt, von einer Stirnseite des Werkzeugs aus durchströmt zu werden.

Der zweite Kühlkanal und/oder dritte Kühlkanal weist insbesondere einen solchen Querschnitt auf, dass der zweite Kühlkanal und/oder dritte Kühlkanal die Form der zweiten Schneidkante, zu der er insbesondere konturnah verläuft, aufnimmt. So kann der Kühlkanal insbesondere eine zur zweiten Schneidkante hinweisende Spitze der Querschnittsfläche aufweisen, um einen möglichst geringen Abstand zwischen Kühlkanal und zweiter Schneidkante zu erzielen. Der von der zweiten Schneidkante abgewandte Bereich der Querschnittsfläche kann insbesondere daraufhin optimiert werden, den Strömungswiderstand des Kühlmittels zu minimieren. Insbesondere soll dieser so ausgestaltet werden, dass die Strömung möglichst laminar ist. Bei einer Ausgestaltung des Fräswerkzeugs als Schlichtfräser kann der Kühlkanal parallel zur zweiten Schneidkante verlaufen, bei einer Ausgestaltung als Schruppfräser ist ein Verlauf parallel zur Einhüllenden der zweiten Schneidkante denkbar.

Zweckmäßigerweise weist das Fräswerkzeug mehrere zweite Kühlkanäle und/oder mehrere dritte Kühlkanäle auf, welche mit dem ersten Kühlkanal fluidverbunden sind.

Insbesondere ist an einem Ende des ersten Kühlkanals eine Verteilerkammer angeordnet, wobei sich die zweiten Kühlkanäle und/oder die dritten Kühlkanäle von der Verteilerkammer erstrecken. Eine solche Verteilerkammer ist insbesondere im stirnseitigen Bereich des Fräswerkzeugs angeordnet. Vorteilhafterweise ist die Verteilerkammer bezüglich der Drehachse rotationssymmetrisch. Die Verteilerkammer ist zweckmäßigerweise ein Ellipsoid oder kugelförmig ausgestaltet. Eine Verteilung des Kühlmittels von einer stirnseitigen Verteilerkammer hat den Vorteil, dass die Kühlwirkung insbesondere in den Bereichen erfolgt, wo sich das Fräswerkzeug in Benutzung am stärksten erwärmt. Insbesondere wird Wärme an den zweiten Schneidkanten entzogen.

In Ausgestaltung stimmt die Anzahl der zweiten Kühlkanäle und/oder die Anzahl der dritten Kühlkanäle mit der Anzahl der zweiten Schneidkanten überein. Zweckmäßigerweise ist die zweite Schneidkante eine Umfangsschneidkante oder eine stirnseitige Schneidkante. Somit kann das Fräswerkzeug die gleiche Anzahl Umfangsschneidkanten und stirnseitigen Schneidkanten aufweisen. Insbesondere weist das Fräswerkzeug je zwei, je drei, je vier, je fünf oder je sechs oder mehr stirnseitige Schneidkanten und/oder Umfangsschneidkanten auf. Eine höhere Anzahl von zweiten Schneidkanten ist möglich. Die Umfangsschneidkanten können insbesondere wendelförmig bzw. helixförmig um die Drehachse verlaufen.

In einer Ausgestaltung umfasst der Schaft eine Vorrichtung zur lösbaren kraftschlüssigen und/oder formschlüssigen Verbindung, insbesondere ein Gewinde, Bajonettverschluss etc.. Im Falle eines Gewindes ist das Fräswerkzeug als Einschraubfräser ausgebildet.

In einer weiteren Ausgestaltung weist der Schaft und/oder Profilkörper innenliegende Hohlräume auf, so dass der Materialverbrauch reduziert wird bzw. das Gewicht des Fräswerkzeuges reduziert wird. Bei dieser Ausgestaltung weist der Schaft und/oder Profilkörper um die Hohlräume eine Struktur, insbesondere ein Gitter auf, welches die Kräfte während des Werkzeugeinsatzes aufnimmt, so dass es durch die Hohlräume zu keinen Stabilitätseinbußen kommt.

Das Fräswerkzeug ist bevorzugt zumindest teilweise, insbesondere vollständig aus HSS oder Hartmetall hergestellt. Das Fräswerkzeug kann auch in einem Abschnitt aus HSS, z.B. den Schaft oder inneren Bereich, und einem weiteren aus Hartmetall, z.B. die Schneiden oder äußeren Bereich, hergestellt sein. In weiterer Ausführungsform kann das Fräswerkzeug zumindest teilweise, insbesondere im Bereich der Kühlkanäle aus Kupfer hergestellt sein. Das Fräswerkzeug kann zusätzlich mit einer Hartschicht z.B. aus CrN beschichtet sein. Das erfindungsgemäße Fräswerkzeug ist insbesondere zumindest teilweise mittels eines additiven Verfahrens hergestellt. Das Fräswerkzeug ist vorzugsweise für die Verwendung von Wasser, Luft, MMS oder flüssigem Stickstoff als Kühlmittel ausgelegt.

Das erfindungsgemäße Verfahren zum Herstellen eines Fräswerkzeugs, insbesondere eines erfindungsgemäßen Fräswerkzeugs, umfasst:
- Bereitstellen eines pulverförmigen Ausgangsmaterials oder schmelzfähigen Filaments als Ausgangsmaterial,
- schichtweises Aufbringen des Ausgangsmaterials mit einem additiven Verfahren, insbesondere Binder Jetting, Laserschmelzen oder Fused Filament Fabrication.

Bei dem erfindungsgemäßen Verfahren wird insbesondere ein 3-D-Drucker verwendet, bei dem nur an vorgegebenen Bereichen ein Bindemittel eingesetzt wird. Alternativ kann auch lokales Schmelzen des pulverförmigen Ausgangsmaterials mit einem hochenergetischen Strahl, insbesondere einem Laserstrahl eingesetzt werden. Der lagenförmige Aufbau im additiven Verfahren kann in Axialrichtung oder Radialrichtung erfolgen. Dabei kann die Druckerauflösung bzw. Dichte der Laserschmelzpunkte an eine gewünschte Strukturgröße angepasst werden.

Zweckmäßigerweise umfasst das Verfahren nachfolgendes Sintern und optional heißisostatisches Pressen insbesondere mit Luftdruck. Die Oberflächen werden zweckmäßigerweise nachfolgend durch Schleifen und/oder Polieren nachbearbeitet und optional mit einer Hartschicht überzogen werden.

Optional umfasst das Verfahren weiterhin: Herstellen eines Kühlkanals mit den Schritten:
- wobei im Bereich des vorgesehenen Kühlkanals die aufgetragene Schicht des Ausgangsmaterials nicht miteinander verbunden wird.

Insbesondere wird im Bereich des Kühlkanals kein Bindemittel aufgetragen beziehungsweise das Pulver nicht aufgeschmolzen. In gleicher Weise können innenliegende Hohlräume hergestellt werden.

Alternativ umfasst das Verfahren zum Herstellen des Kühlkanals
- Aufbringen eines wulstförmigen Platzhalters,
- Überziehen des Platzhalters mit einer Schicht aus erstem Material mittels einem additiven Verfahren,
- Entfernen des Platzhalters.

Optional umfasst das Verfahren Bereitstellen eines Schafts mit einem ersten Kühlkanal und Herstellen des Profilkörpers mit den vorgenannten Schritten.

In Ausgestaltung wird das Verfahren unter Schutzgas und/oder in einer Unterdruckatmosphäre durchgeführt.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen jeweils in einer schematischen Prinzipskizze:
- Fig. 1: erste Ausgestaltung eines Fräswerkzeugs;
- Fig. 2a-e: Querschnitte und Frontansicht durch das Fräswerkzeug;
- Fig. 3: Längsschnitt des Fräswerkzeugs;
- Fig. 4: Kühlmittelfluss;
- Fig. 5: stirnseitiger Kühlmittelausgang;
- Fig. 6a-h: Querschnittsformen der Kühlmittelkanäle;
- Fig. 7: zweite Ausgestaltung eines Fräswerkzeugs;
- Fig. 8: Querschnitt des Fräswerkzeugs der zweiten Ausgestaltung;
- Fig. 9: Längsschnitt des Fräswerkzeugs der zweiten Ausgestaltung;
- Fig. 10: Kühlmittelfluss und
- Fig. 11: stirnseitiger Kühlmittelausgang.

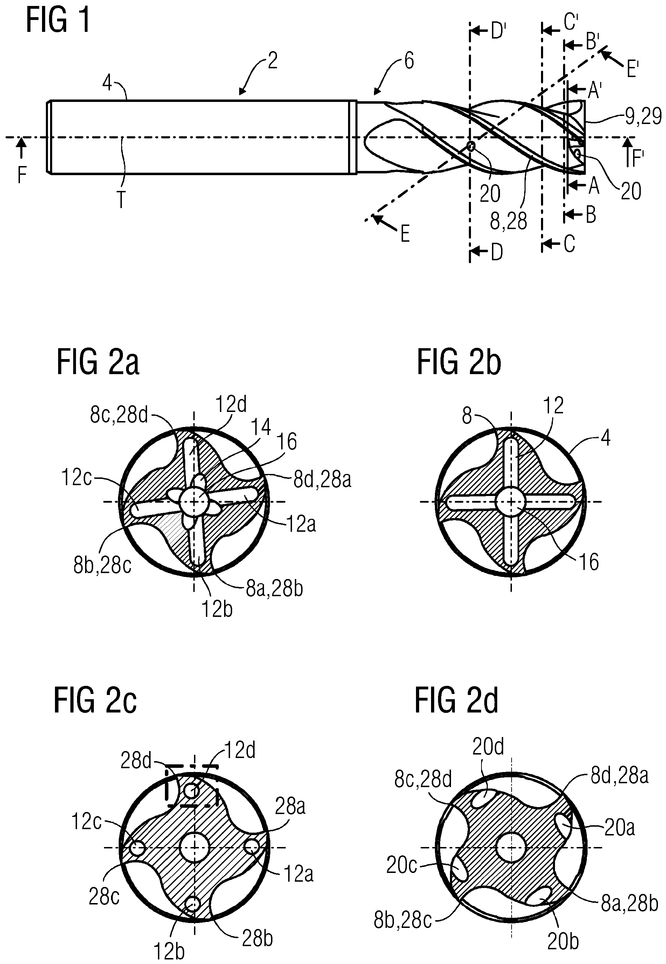

Fig. 1 zeigt eine erste Ausgestaltung eines Fräswerkzeugs. Das Fräswerkzeug 2 weist einen Schaft 4 und eine Profilkörper 6 auf. Das Fräswerkzeug 2 weist weiterhin eine Drehachse T auf. Das Fräswerkzeug 2 weist vier als Umfangsschneiden ausgestaltete erste Schneidkanten 8 und vier als stirnseitige Schneiden ausgestaltete erste Schneidkanten 9 auf. Die ersten Schneidkanten 8 verlaufen wendelförmig um die Drehachse. Auf die erste Schneidkanten 8 ist jeweils eine Austrittsöffnungsöffnung 20 gerichtet, auf die erste Schneidkanten 9 ist jeweils eine Austrittsöffnungsöffnung 22 gerichtet.

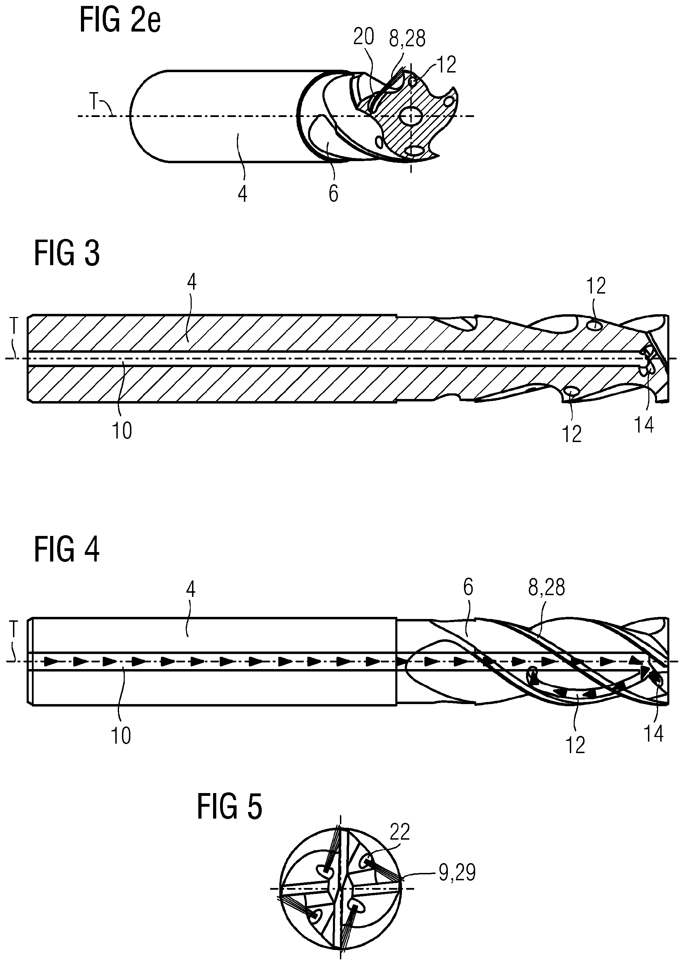

Im Schaft 4 verläuft ein erster Kühlkanal 10, welcher sich entlang der Drehachse T erstreckt. Der Verlauf des ersten Kühlkanals 10 lässt sich auch im in Fig. 3 dargestellten Längsschnitt entlang F-F' erkennen. An der Position des Schnitts A-A', welcher in Fig. 2a dargestellt ist, mündet der erste Kühlkanal 10 in eine Verteilerkammer 16. Die Verteilerkammer 16 ist insbesondere symmetrisch zur Drehachse T angeordnet und hier ein Ellipsoid. Von der Verteilerkammer 16 erstrecken sich vier zweite Kühlkanäle 12 und vier dritte Kühlkanäle 14. Die zweiten Kühlkanäle 12 sind hier den Umfangsschneidkanten (zweiten Schneidkanten 28) zugeordnet und die dritten Kühlkanäle 14 sind hier den Stirnschneidkanten (zweiten Schneidkanten 29) zugeordnet. Dabei verläuft ein zweiter Kühlkanal 12a unterhalb einer zweiten Schneidkante 28a, welche gleichzeitig bezüglich eines benachbarten Kühlkanals 12d erste Schneidkante 8d ist. Die zweiten Kühlkanäle 12 erstrecken sich zu den ersten Austrittsöffnungen 20, während sich die dritten Kühlkanäle 14 zu den zweiten Austrittsöffnungen 22 erstrecken, welche stirnseitig am Profilkörper 6 angeordnet sind. Die dritten Kühlkanäle 14 erstrecken sich zumindest abschnittsweise entlang der Stirnschneiden.

Die zweiten Kühlkanäle 12 erstrecken sich von der Verteilerkammer 16 zunächst nach außen zu den zweiten Schneidkanten 28. Ein Schnitt entlang der Position B-B' aus Fig. 1 ist in Fig. 2b dargestellt. Im Weiteren verlaufen die zweiten Kühlkanäle 12 dann entlang der spiralförmigen zweiten Schneidkante 28 von der Stirnseite Richtung Schaft 4. Die zweiten Kühlkanäle 12 erstrecken sich somit abschnittsweise konturnah zu den Umfangsschneidkanten. Ein Schnitt entlang der Position C-C' aus Fig. 1 ist in Fig. 2c dargestellt. Die zweiten Kühlkanäle 12 haben in der gezeigten Ausführung einen runden Querschnitt.

Die zweiten Kühlkanäle 12 führen schließlich zu einer ersten Austrittsöffnung 20 (siehe D-D'). Dieser befindet sich rückseitig hinter einer zweiten Schneidkante 28 und ist auf die benachbarte erste Schneidkante 8 ausgerichtet, wie auch in dem in Fig. 2e dargestellten Schrägschnitt entlang E-E' zu sehen ist. Zum Beispiel ist die erste Austrittsöffnung 20d auf die erste Schneidkante 8d, welche gleichzeitig zweite Schneidkante 28a ist, ausgerichtet.

In Fig. 4 und 5 ist der Kühlmittelfluss schematisch dargestellt. Das Kühlmittel fließt zunächst durch den Schaft 4 Richtung Profilkörper 6. Im Bereich unterhalb der Stirnschneiden 9 ist die Verteilerkammer 16 angeordnet, in dem sich das Kühlmittel auf die zweiten und dritten Kühlkanäle 12 und 14 verteilt. In der Ansicht auf die Stirnseite in Fig. 5 sind die Austrittsöffnungen 20 angeordnet, welche auf die als Stirnschneiden ausgeführten ersten Schneidkanten 9 ausgerichtet sind, so dass diese von einem Kühlmittelstrahl getroffen werden.

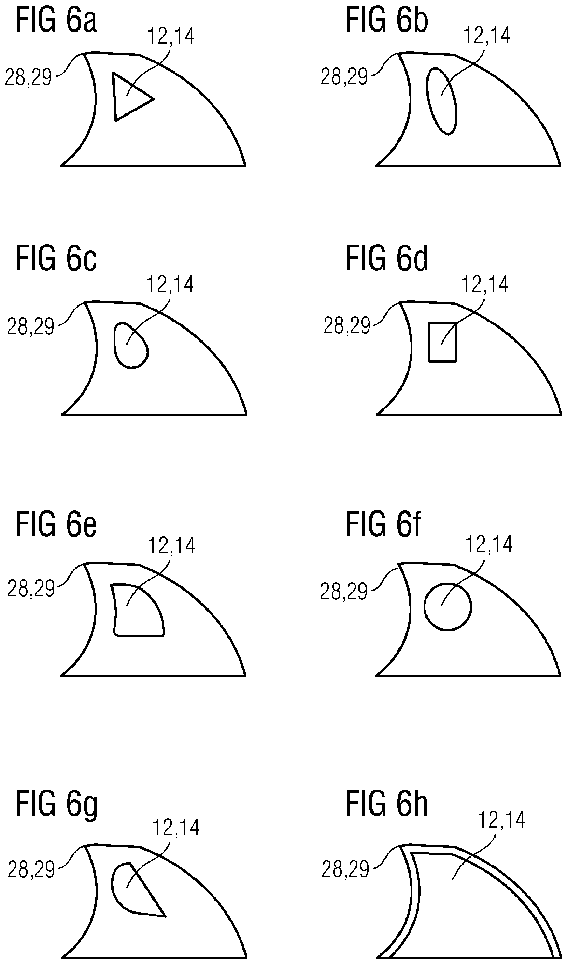

In Fig. 6a-h sind verschiedene Querschnitte für die zweiten Kühlkanäle 12 und ggf. auch dritten Kühlkanäle 14 dargestellt in einem Profil einer zweiten Schneidkante 28, 29 dargestellt.

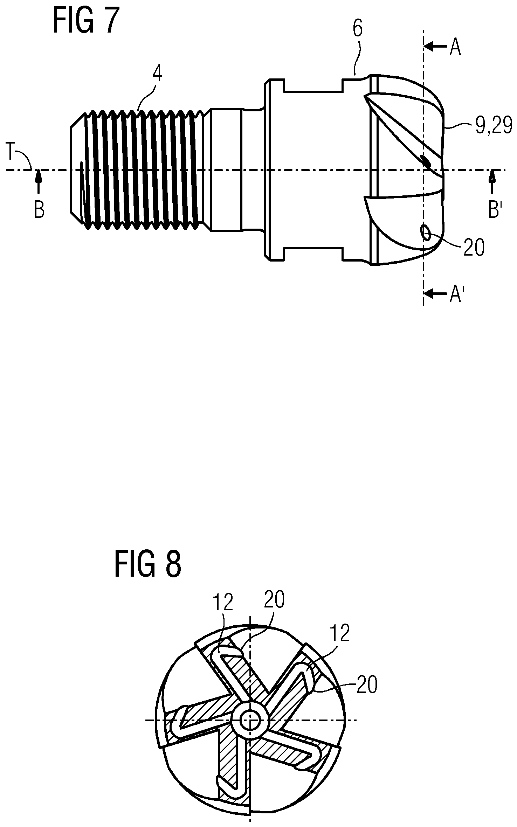

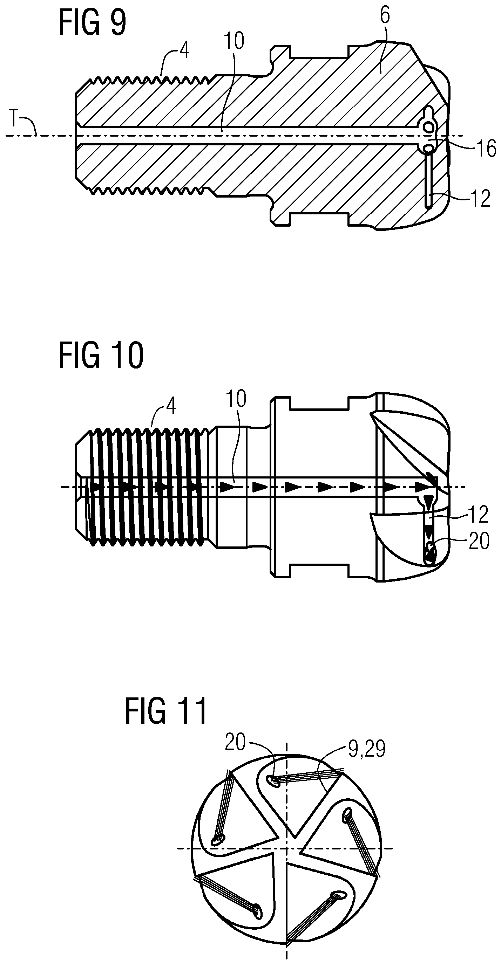

Fig. 7 zeigt eine zweite Ausgestaltung des Fräswerkzeugs 2. Das Fräswerkzeug 2 ist um eine Drehachse T drehbar. Das Fräswerkzeug 2 ist als Einschraubfräser ausgelegt mit einer lösbaren kraft- und/oder formschlüssigen Verbindungsvorrichtung hier in Form eines mit einem Gewinde versehenen Schafts 4. Der Profilkörper 6 weist im Stirnbereich fünf Schneidkanten 9 auf. Rückseitig der Schneiden weist der Profilkörper 6 jeweils eine erste Austrittsöffnung 20 auf, welche auf die jeweils benachbarte erste Schneidkante 9 gerichtet ist. Innenliegend weist das Fräswerkzeug 2 einen entlang der Drehachse T verlaufenden ersten Kühlkanal 10 auf, der insbesondere im Längsschnitt Fig. 9 sichtbar ist. Der erste Kühlkanal 10 mündet in eine Verteilerkammer 16, von der aus sich fünf zweite Kühlkanäle 12 erstrecken. Die zweiten Kühlkanäle 12 verlaufen entlang der zweiten Schneidkanten 29, wie sich insbesondere aus den Fig. 8, Schnitt entlang A-A' der Fig. 7. und Fig. 11 Aufsicht auf die Stirnseite des Fräswerkzeugs 2 ergibt. Kühlmittel tritt in das Fräswerkzeug am Ende des Schaftes 4, wie in Fig. 10 dargestellt, ein und wird zur Verteilerkammer 16 geleitet. Dort wird das Kühlmittel in die zweiten Kühlkanäle 12 geleitet und tritt zum Kühlen der Schneidkanten 9 aus den Austrittsöffnungen 20 aus, so dass ein Kühlmittelstrahl die Schneidkanten 9 trifft.

### Bezugszeichenliste

- 2: Fräswerkzeug
- 4: Schaft
- 6: Profilkörper
- 8: erste Schneidkante
- 9: erste Schneidkante
- 10: erster Kühlkanal
- 12: zweiter Kühlkanal
- 14: dritter Kühlkanal
- 16: Verteilerkammer
- 20: erste Austrittsöffnung
- 22: zweite Austrittsöffnung
- 28: zweite Schneidkante
- 29: zweite Schneidkante
- T: Drehachse

## Patentansprüche

1. Fräswerkzeug (2) umfassend einen Schaft (4) mit einer Drehachse (T) und einen Profilkörper (6), wobei der Profilkörper (6) zumindest eine erste Schneidkante (8, 9), einen ersten Kühlkanal (10) und einen zweiten Kühlkanal (12) aufweist, wobei der erste Kühlkanal (10) im Schaft (4) zumindest abschnittsweise entlang der Drehachse (T) verläuft, wobei der erste Kühlkanal (10) und der zweite Kühlkanal (12) fluidverbunden sind und wobei der zweite Kühlkanal (12) zumindest eine erste Austrittsöffnung (20) aufweist, wobei die Austrittsöffnungsfläche der ersten Austrittsöffnung (20) der ersten Schneidkante (8, 9) gegenüberliegt.

2. Fräswerkzeug (2) nach Anspruch 1, wobei das Fräswerkzeug zumindest zwei erste Schneidkanten (8, 9) aufweist, weiterhin umfassend zumindest einen dritten Kühlkanal (14), welcher zumindest eine zweite Austrittsöffnung (22) aufweist, wobei die Austrittsöffnungsfläche der ersten Austrittsöffnung (20) einer der ersten Schneidkanten (8) und der zweiten Austrittsöffnung (22) der anderen der ersten Schneidkanten (9) gegenüberliegt und/oder wobei die erste Schneidkante (8, 9) eine Umfangsschneidkante (8) oder eine stirnseitige Schneidkante (9) ist.

3. Fräswerkzeug (2), insbesondere nach einem der vorhergehenden Ansprüche, umfassend einen Schaft (4) mit einer Drehachse (T) und einen Profilkörper (6), wobei der Profilkörper (6) zumindest eine zweite Schneidkante (28, 29), einen ersten Kühlkanal (10) und einen zweiten Kühlkanal (12) aufweist, wobei der erste Kühlkanal (10) im Schaft (4) zumindest abschnittsweise entlang der Drehachse (T) verläuft, wobei der erste Kühlkanal (10) und der zweite Kühlkanal (12) fluidverbunden sind, wobei der zweite Kühlkanal (12) zumindest abschnittsweise parallel zu der zweiten Schneidkante (28, 29) verläuft.

4. Fräswerkzeug (2) nach Anspruch 3, umfassend zumindest eine weitere zweite Schneidkante (28, 29) und einen dritten Kühlkanal (14), wobei der dritte Kühlkanal (14) zumindest abschnittsweise parallel zur weiteren zweiten Schneidkante (28, 29) verläuft und/oder
wobei der zweite Kühlkanal (12) und/oder dritte Kühlkanal (14) einen solchen Querschnitt aufweist, dass der zweite Kühlkanal (12) und/oder dritte Kühlkanal (14) die Form der zweiten Schneidkante (28, 29) aufnimmt und/oder wobei die zweite Schneidkante (28, 29) eine Umfangsschneidkante (28) oder eine stirnseitige Schneidkante (29) ist, wobei die zweite Schneidkante (28, 29) optional erste Schneidkante (8, 9) für einen in Drehrichtung vorauseilenden zweiten oder dritten Kühlkanal (12, 14) ist.

5. Fräswerkzeug (2) nach einem der vorhergehenden Ansprüche, wobei das Fräswerkzeug mehrere zweite Kühlkanäle (12) und/oder mehrere dritte Kühlkanäle (14) aufweist, welche mit dem ersten Kühlkanal (10) fluidverbunden sind,
wobei optional an einem Ende des ersten Kühlkanals (10) eine Verteilerkammer (16), insbesondere im stirnseitigen Bereich des Fräswerkzeugs, angeordnet ist, wobei sich die zweiten Kühlkanäle (12) und/oder die dritten Kühlkanäle (14) von der Verteilerkammer (16) erstrecken.

6. Fräswerkzeug (2) nach einem der Ansprüche 2, 4 oder 5, wobei die Anzahl der zweiten Kühlkanäle (12) und/oder die Anzahl der dritten Kühlkanäle (14) mit der Anzahl der ersten Schneidkanten (8, 9) und/oder zweiten Schneidkanten (28, 29) übereinstimmt.

7. Fräswerkzeug (2) nach einem der vorhergehenden Ansprüche, wobei der Schaft (4) eine Vorrichtung zur lösbaren kraftschlüssigen und/oder formschlüssigen Verbindung, insbesondere ein Gewinde, umfasst, so dass das Fräswerkzeug insbesondere als Einschraubfräser ausgebildet ist und/oder wobei das Fräswerkzeug zumindest teilweise, insbesondere vollständig, aus HSS oder Hartmetall hergestellt ist, und/oder wobei das Fräswerkzeug zumindest teilweise mittels einem additiven Verfahren hergestellt ist und/oder wobei das Fräswerkzeug für die Verwendung von Wasser, Luft oder flüssigem Stickstoff als Kühlmittel ausgelegt ist und/oder
wobei der Schaft und/oder der Profilkörper mit einer inneren Struktur versehen ist, in der zumindest ein Hohlraum ausgebildet ist.

8. Fräswerkzeug (2) nach einem der vorhergehenden Ansprüche, wobei der zweite Kühlkanal (12) und/oder dritte Kühlkanal (14) einen Querschnitt über die gesamte Länge oder abschnittsweise aufweist, welcher ausgewählt ist aus: Rund, Dreieckig, Oval, Tropfenförmig, Viereckig, Rechteckig, Quadratisch, Trapezförmig, Fünfeckig.

9. Verfahren zum Herstellen eines Fräswerkzeugs nach einem der Ansprüche 1 bis 8, umfassend:
- Bereitstellen eines pulverförmigen Ausgangsmaterials oder schmelzfähigen Filaments als Ausgangsmaterial,
- schichtweises Aufbringen des Ausgangsmaterials mit einem additiven Verfahren, insbesondere Binder Jetting, Laserschmelzen oder Fused Filament Fabrication.

10. Verfahren nach Anspruch 9, weiterhin umfassend nachfolgendes Sintern und/oder heißisostatisches Pressen.

11. Verfahren nach Anspruch 9 oder 10, wobei das Verfahren weiterhin umfasst: Herstellen eines Kühlkanals mit den Schritten:
- Aufbringen eines wulstförmigen Platzhalters,
- Überziehen des Platzhalters mit einer Schicht aus erstem Material mittels einem additiven Verfahren,
- Entfernen des Platzhalters.

12. Verfahren umfassend: Bereitstellen eines Schafts (4) mit einem ersten Kühlkanal (10) und Herstellen des Profilkörpers (6) nach einem der Ansprüche 9 bis 11.

13. Verfahren nach einem der Ansprüche 9 bis 12, wobei das Verfahren unter Schutzgas und/oder in einer Unterdruckatmosphäre durchgeführt wird.
